Europäisches Patentamt

European Patent Office

Office européen des brevets

(19)

(11) Veröffentlichungsnummer: **0 225 283 B1**

(12) **EUROPÄISCHE PATENTSCHRIFT**

(45) Veröffentlichungstag der Patentschrift:
**12.04.89**

(51) Int. Cl.⁴: **B65D 88/30, B60P 1/64**

(21) Anmeldenummer: **86810507.3**

(22) Anmeldetag: **04.11.86**

(54) **Silo.**

(30) Priorität: **07.11.85 CH 4790/85**

(43) Veröffentlichungstag der Anmeldung:
**10.06.87 Patentblatt 87/24**

(45) Bekanntmachung des Hinweises auf die Patenterteilung:
**12.04.89 Patentblatt 89/15**

(84) Benannte Vertragsstaaten:
**AT BE CH DE ES FR GB GR IT LI LU NL SE**

(56) Entgegenhaltungen:
**DE-A- 2 260 159**
**DE-A- 2 435 900**

(73) Patentinhaber: **Hydro Mécanique Research S.A., 6, rue Heine, L-1011 Luxembourg(LU)**

(72) Erfinder: **Nijenhuis, Harry, Toldijk 29, NL-7901 TA Hoogeveen(NL)**

(74) Vertreter: **White, William et al, Isler AG Patentanwalts-Bureau Walchestrasse 23, CH-8006 Zürich(CH)**

EP 0 225 283 B1

## Beschreibung

Ein Silo gemäss Oberbegriff des Anspruchs 1 ist aus der DE-OS 2 260 159 bekannt. Solche Silos werden z.B. zum Lagern von Zement oder Gips auf Baustellen verwendet. Sie sind relativ gross und müssen deshalb liegend transportiert werden. Zum Aufladen auf ein Transportfahrzeug fährt beim bekannten Silo das Fahrzeug dicht an das Silo heran. Die Ladebrücke wird in eine nahezu senkrechte Stellung gekippt, in welcher sie das Silo überragt. Nun wird das obere Ende des Silos über Zugseile mit der Ladebrücke verbunden. Beim Absenken der Ladebrücke wird dann das Silo gekippt und auf die Ladebrücke aufgeladen.

Nachteilig bei diesem Silo ist, dass sowohl beim Auf- als auch beim Abladen jeweils eine Bedienungsperson auf das Silo klettern muss, um die Zugseile mit der Anhängevorrichtung zu verbinden bzw. sie davon zu lösen. Die vorliegende Erfindung beseitigt diesen Nachteil durch die kennzeichnenden Merkmale des Anspruchs 1.

Bei abgehängtem Zugseil ist das Kupplungselement in seiner unteren Endstellung, z.B. auf Schulterhöhe der Bedienungsperson. Das Zugseil kann daher bequem mit der Anhängevorrichtung verbunden werden. Beim Anziehen des Zugseils gleitet das Kupplungselement zunächst bis zum Anschlag im oberen Bereich des Silos, worauf das Silo wie das vorbekannte Silo auf das Transportfahrzeug aufgeladen werden kann. Beim Abladen wird zunächst das Silo in der bekannten Art abgestellt. Wird nun das Zugseil weiter abgewunden, gleitet das Kupplungselement in seine untere Endstellung, wo es wieder bequem vom Zugseil gelöst werden kann.

Aus der DE-OS 2 435 900 ist ein weiteres Silo bekannt, das horizontal auf ein Transportfahrzeug aufgeladen und durch dieses vertikal auf den Boden gestellt werden kann. Dazu ist am hinteren Ende des Transportfahrzeuges ein um eine horizontale Achse schwenkbarer Arm befestigt. Das freie Ende des Armes greift im oberen Bereich des Silos lösbar in eine Längsschiene ein. Das Lösen und Herstellen der Kupplung zwischen Schwenkarm und Schiene ist allerdings noch aufwendiger als die zuvor beschriebene Seilkupplung gemäss DE-OS 2 260 159.

Nachfolgend werden Ausführungsbeispiele der Erfindung anhand der Zeichnung erläutert. Darin zeigt:

Fig. 1 eine erste Ausführungsform im Aufriss,
Fig. 2 einen Querschnitt durch die Ausführungsform nach Fig. 1,
Fig. 3 eine zweite Ausführungsform im Aufriss,
Fig. 4 einen Querschnitt durch die Ausführungsform nach Fig. 3,
und Fig. 5 bis Fig. 7 die Vorgänge beim Aufladen des erfindungsgemässen Silos.

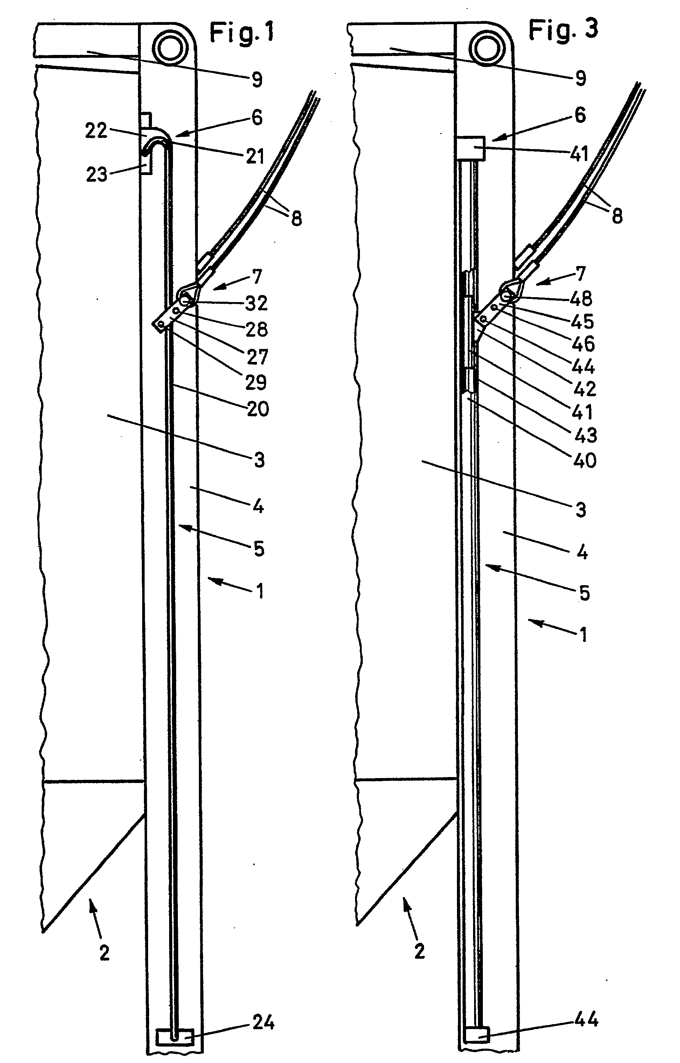

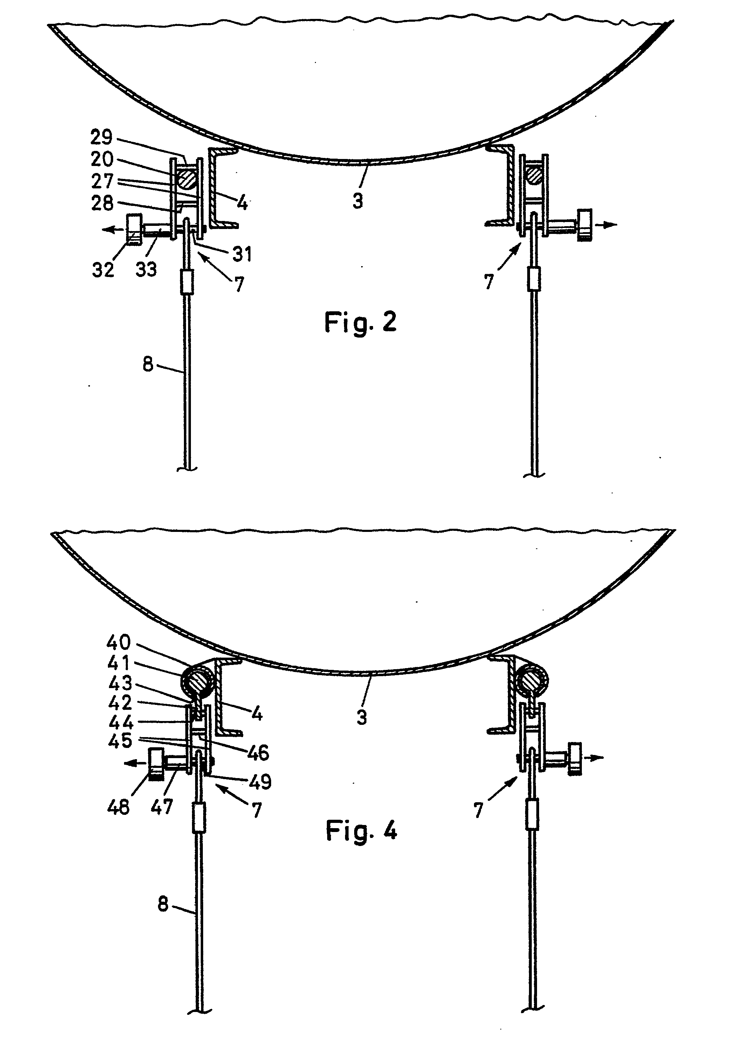

Bei der Ausführungsform nach Fig. 1 und 2 sind an der Seitenwand 3 des Silobehälters 2 zwei Stützprofile 4 befestigt, welche bei stehendem Silo 1 als Beine und für den Transport als Auflage dienen. An jedem der Stützprofile 4 ist seitlich eine Führungsstange 20 befestigt. Das obere Ende der Stange 20 ist abgekröpft. Die Abkröpfung 21 bildet einen Anschlag 6 und ist durch eine Platte 22 verstärkt, welche über einen Verbindungsklotz 23 am Profil 4 befestigt ist. Das untere Ende der Stange 20 ist ebenfalls über einen Distanzhalter 24 mit dem Profil 4 verbunden.

Die Stange 20 wird von einem Kupplungselement 7 umschlungen, welches im Ausführungsbeispiel nach Fig. 1 und 2 aus zwei parallelen Platten 27 besteht, die durch zwei Stifte 28, 29 starr miteinander verbunden sind. Die Stange 20 ist mit Spiel im Raum zwischen den Platten 27 und Stiften 28, 29 angeordnet, so dass das Kupplungselement 7 zwischen dem Distanzhalter 24 und dem oberen Anschlag 6 längs der Stange 20 gleiten kann. An der einen Platte 27 ist eine Hülse 33 befestigt, in welcher ein mit einem Griff 32 versehener Bolzen 31 geführt ist. Der Bolzen 31 ist durch eine Feder in der Hülse 33 in die dargestellte Grundstellung vorbelastet, in welcher er in eine Bohrung in der gegenüberliegenden Platte 27 ragt. Durch Ziehen am Griff 32 in Pfeilrichtung (Fig. 2) kann eine Endschlinge eines Zugseiles 8 mit dem Kupplungselement 7 gekuppelt oder von ihm entkuppelt werden.

Das Silo 1 gemäss Fig. 3 und 4 hat ebenfalls zwei mit der Seitenwand 3 des Silobehälters 2 verbundene Stützprofile 4. Hier besteht die Führung 5 aus je einem seitlich an die Stützprofile 4 angeschweissten, längsgeschlitzten Rohr 40 mit kreisförmigem Querschnitt. Oben ist ein Anschlagblock 41 und unten ein weiterer Anschlagblock 44 für das Kupplungselement 7 mit dem Profil 4 verbunden. Das Kupplungselement 7 umfasst hier einen im Rohr 40 mit Spiel geführten Stab 41, von welchem ein Steg 42 radial absteht. Der Steg 42 ragt durch den Schlitz 43 des Rohres 40 und ist über einen Stift 44 gelenkig mit zwei Platten 45 verbunden, die mittels eines weiteren Stiftes 46 miteinander vernietet sind. An der einen Platte 45 ist wiederum eine Hülse 47 befestigt, in welcher ebenfalls ein mit einem Griff 48 versehener Bolzen 49 geführt ist. Der Bolzen 49 ist durch eine Feder in die dargestellte Stellung vorbelastet, in welcher er in eine Bohrung in der gegenüberliegenden Platte 45 ragt. Die Betätigung des Kupplungselements 7 gemäss Fig. 3 und 4 ist gleich wie jenes gemäss Fig. 1 und 2.

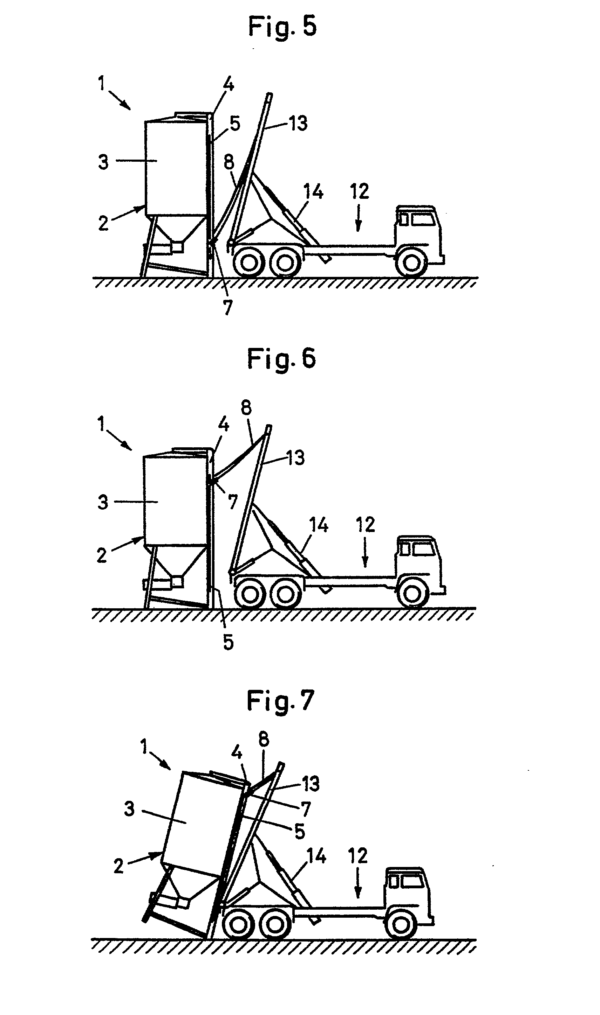

Das Aufladen des Silos 1 auf ein Transportfahrzeug 12 ist in den Fig. 5 bis 7 dargestellt. Zunächst fährt das Fahrzeug 12 rückwärts bis nahe an das Silo 1 und schwenkt seine Ladebrücke 13 mittels zwei Teleskopzylindern 14 in eine nahezu senkrechte Stellung. Die Zugseile 8 werden soweit abgewunden, dass ihre Endschlaufen an die in ihrer unteren Endlage stehenden Kupplungselemente 7 angekuppelt werden können (Fig. 2 und 4). Nun werden die Seile 8 teilweise aufgewunden (Fig. 6), wobei die Kupplungselemente 7 längs ihren Führungen 5 nach oben gleiten. Das Fahrzeug 12 wird etwas zurückgesetzt, bis es das Silo 1 nahezu berührt. Die Seile 8 werden weiter angezogen, bis die Kupplungselemente 7 an ihren oberen Anschlägen 6 anliegen. Beim Absenken der Ladebrücke 13 wird über die Seile 8 das Silo 1 gekippt (Fig. 7) und schliesslich auf die Ladebrücke 13 aufgeladen, wobei es mit seinen Stützprofilen 4 aufliegt. Das Abladen erfolgt in umgekehrter Reihenfolge.

## Patentansprüche

1. Silo mit einer Anhängevorrichtung (5–7) zum Befestigen des Silos in seinem oberen Bereich an einer kippbaren Ladebrücke eines Transportfahrzeuges, dadurch gekennzeichnet, dass die Anhängevorrichtung (5–7) mindestens eine längs des Silobehälters (2) angeordnete Führung (5) mit einem Anschlag (6) im oberen Bereich des Silos, sowie ein längs der Führung (5) verschiebbares Kupplungselement (7) für ein Seil (8) umfasst.

2. Silo nach Anspruch 1, dadurch gekennzeichnet, dass die Anhängevorrichtung (5–7) zwei parallele Führungen (5) mit je einem verschiebbaren Kupplungselement (7) umfasst.

3. Silo nach Anspruch 1 oder 2, dadurch gekennzeichnet, dass die Führung (5) eine parallel zur Seitenwand (3) des Silobehälters (2) angeordnete Stange (20) umfasst, die an ihren beiden Enden an einem mit dem Silobehälter (2) verbundenen Stützprofil (4) befestigt und vom Kupplungselement (7) mit Spiel umschlungen ist.

4. Silo nach Anspruch 3, dadurch gekennzeichnet, dass die Stange (20) an ihrem oberen Ende zur Bildung des Anschlages (6) abgekröpft ist.

5. Silo nach Anspruch 1 oder 2, dadurch gekennzeichnet, dass die Führung (5) ein mit dem Silobehälter (2) verbundenes, geschlitztes Hohlprofil (40) ist, in welchem das Kupplungselement (7) verschiebbar geführt ist.

6. Silo nach Anspruch 5, dadurch gekennzeichnet, dass das Hohlprofil ein geschlitztes Rohr (40) mit kreisförmigem Querschnitt ist, dass das Kupplungselement (7) einen kreiszylindrischen, mit Spiel im Rohr (40) geführten Stab (41) aufweist, von welchem ein durch den Schlitz des Rohres (40) ragender Steg (42) radial absteht.

7. Silo nach Anspruch 5 oder 6, dadurch gekennzeichnet, dass das Hohlprofil (40) an einem mit dem Silobehälter (2) verbundenen Stützprofil (4) befestigt ist.

## Claims

1. Silo with an attachment device (5–7) for fixing the silo by its upper region to a tiltable loading bridge of a transporting vehicle, characterised in that the attachment device (5–7) includes at least one guideway (5) arranged longitudinally on the silo container (2) with a stop (6) in the upper region of the silo, and a coupling element (7), which can be slid along the guideway (5), for a cable (8).

2. Silo according to claim 1, characterised in that the attachment device (5–7) comprises two parallel guideways (5) each with a slidable coupling element (7).

3. Silo according to claim 1 or 2, characterised in that the guideway (5) includes a rod (20) arranged parallel to the side wall (3) of the silo container (2), which is attached at both its ends to a supporting channel (4) connected to the silo container (2), and around which the coupling element (7) is wound with some play.

4. Silo according to claim 3, characterised in that the rod (20) is capped on its upper end to form the stop (6).

5. Silo according to claim 1 or 2, characterised in that the guideway (5) is a slotted hollow profile (40) connected to the silo container (2), in which the coupling element (7) is carried such that it is slidable.

6. Silo according to claim 5, characterised in that the hollow profile is a slotted tube (40) with a circular cross-section, that the coupling element (7) has a cylindrical rod (41) carried with play in the tube (40), from which a ridge (42), which projects through the slot in the tube (40), stands out radially.

7. Silo according to claim 5 or 6, characterised in that the hollow tube profile (40) is attached to a supporting channel profile (4) which is connected to the silo container (2).

## Revendications

1. Silo pourvu d'un mécanisme d'accrochage permettant sa fixation, dans sa partie supérieure, à la plateforme de charge d'un véhicule de transport, caractérisé en ce que le mécanisme d'accrochage (5–7) comprend au moins un guide (5) disposé le long du réservoir (2) du silo et doté d'une butée (6) dans la zone supérieure du silo, ainsi qu'un élément coupleur (7) destiné à un câble (8) et déplaçable le long du guide (5).

2. Silo selon la revendication 1, caractérisé en ce que le mécanisme d'accrochage (5–7) comprend deux guides parallèles (5), chacun avec un élément coupleur déplaçable (7).

3. Silo selon l'une quelconque des revendications 1 et 2, caractérisé en ce que le guide (5) comprend une tige (20) disposée parallèlement à la paroi latérale (3) du réservoir (2) du silo, laquelle est fixée, par ses deux extrémités, à un profilé d'appui (4) relié au réservoir (2) du silo et entourée avec un certain jeu de l'élément coupleur (7).

4. Silo selon la revendication (3), caractérisé en ce que la tige (20) est coudée à son extrémité supérieure afin de former la butée (6).

5. Silo selon l'une quelconque des revendications 1 et 2, caractérisé en ce que le guide (5) est un profilé creux (40) fendu, raccordé au réservoir (2) du silo et dans lequel est monté l'élément coupleur (7) d'une manière déplaçable.

6. Silo selon la revendications 5, caractérisé en ce que le profilé creux est un tube fendu (40) à section transversale ronde; en ce que l'élément coupleur (7) présente une barre cylindrique (41) montée avec un certain jeu dans le tube (40) et à partir de laquelle se prolonge radialement un plat (42) faisant saillie par une fente du tube (40).

7. Silo selon l'une quelconque des revendications 5 et 6, caractérisé en ce que le profilé creux (40) est fixé à un profilé de soutien (4) relié au réservoir (2) du silo.

Fig.1

Fig. 3

Fig. 2

Fig. 4

EP 0 225 283 B1

Fig. 5

Fig. 6

Fig. 7